(19)

Europäisches
Patentamt
European
Patent Office
Office européen
des brevets

(11) **EP 3 498 874 A1**

(12) **EUROPEAN PATENT APPLICATION**
published in accordance with Art. 153(4) EPC

(43) Date of publication:
**19.06.2019 Bulletin 2019/25**

(21) Application number: **17837006.0**

(22) Date of filing: **02.08.2017**

(51) Int Cl.:
*C22C 38/00* (2006.01)   *B23K 9/00* (2006.01)
*B23K 9/007* (2006.01)   *B23K 9/23* (2006.01)
*B23K 35/30* (2006.01)   *C22C 38/58* (2006.01)

(86) International application number:
**PCT/JP2017/028015**

(87) International publication number:
**WO 2018/025904 (08.02.2018 Gazette 2018/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.08.2016 JP 2016154054**

(71) Applicant: **Kabushiki Kaisha Kobe Seiko Sho
(Kobe Steel, Ltd.)
Kobe-shi, Hyogo 651-8585 (JP)**

(72) Inventors:
• **YASHIMA Takashi
Kanagawa 251-8551 (JP)**
• **SUZUKI Reiichi
Kanagawa 251-8551 (JP)**
• **MIYATA Minoru
Kanagawa 251-8551 (JP)**

(74) Representative: **Müller-Boré & Partner
Patentanwälte PartG mbB
Friedenheimer Brücke 21
80639 München (DE)**

(54) **ARC SPOT WELDING METHOD, AND WELDING WIRE**

(57)     The present invention pertains to: a method for arc spot welding a steel plate having a carbon equivalent CeqBM of 0.35 or more (the carbon equivalent CeqBM is defined in the specification) and containing 0.35 mass% or more of C, the method being characterized by forming a weld metal having a structure in which the proportion of an austenitic structure exceeds 80%; and a welding wire suitable for being used therefor. According to the arc spot welding method, brittle fracture can be prevented and high joint strength can be obtained even when the C content in the steel plate is high.

**EP 3 498 874 A1**

**Description**

Technical Field

The present invention relates to an arc spot welding method and a welding wire.

Background Art

In the field of automobiles, car bodies are increasingly becoming light-weight as the fuel efficiency is pursued and regulations on exhaust gas are imposed. Under such trends, high-strength steel sheets having a tensile strength exceeding 780 MPa are increasingly employed as the steel sheets used in automobile parts, and it is expected that the trends toward higher strength will continue in the future. Moreover, structural parts, such as car body parts, formed to have complicated shapes are required to have high press formability as well as high strength.

Thus, there is a tendency to use steel sheets with an increased C content in order to meet both of these properties. Meanwhile, resistance spot welding is mostly employed in car body assembly and joining of parts. Although addition of C to the steel sheets is effective for increasing the strength of the steel sheets and improving the press formability, welding heat during the course of resistance spot welding generates martensite in the heat affected zone (HAZ), resulting in excessive hardening and embrittlement. Thus, there has been a problem of significantly degraded weldability, such as degraded strength and generation of cracks.

Meanwhile, arc spot welding is known as an alternative welding technique for the resistance spot welding. For example, PTL 1 describes an arc spot welded joint obtained by performing arc spot welding on high-tensile steel sheets superimposed on each other, in which the weld metal can obtain strength by controlling the relationship between the base metal hardness of a high-tensile steel sheet and the weld metal hardness to be in an appropriate range, and an arc spot welded joint with high cross tensile strength and excellent joint strength is thereby obtained.

Citation List

Patent Literature

PTL 1: Japanese Unexamined Patent Application Publication No. 2013-10139

Summary of Invention

Technical Problem

PTL 1 describes that the joint strength can be increased by equalizing the hardness of the weld metal and the hardness of the steel sheet. However, PTL 1 does not take into account the embrittlement of the HAZ. Moreover, a general-purpose welding wire is used as the welding wire. In such a case, when a steel sheet having a high C content is used as the base metal, embrittlement of the HAZ becomes notable, and brittle fracture is considered to occur without gaining sufficient joint strength.

Thus, an object of the present invention is to provide an arc spot welding method with which brittle fracture is prevented and high joint strength can be obtained even when a steel sheet having a high C content is used, and to provide a welding wire suitable for use in this method.

Solution to Problem

The inventors of the present invention have conducted extensive investigations, found that the object can be achieved by forming a weld metal having a structure mainly composed of an austenite structure, and thus accomplished the present invention.

That is, the present invention relates to an arc spot welding method that uses a steel sheet having a carbon equivalent $Ceq_{BM}$, which is expressed by formula (1) below, of 0.35 or more and a C content of 0.35 mass% or more, the method including forming a weld metal having a structure in which a proportion of an austenite structure is more than 80%:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and $[V]_{BM}$ respectively represent C, Mn, Cu, Ni, Cr, Mo, and V contents (mass%) in the steel sheet).

In the arc spot welding method described above, a welding wire containing 30 mass% or more of Ni may be used.

In the arc spot welding method described above, a welding wire containing C: 1.5 mass% or less, Si: 0.5 to 0.7 mass%, Mn: 10 to 20 mass%, Ni: less than 30 mass%, Cr: 1 to 5 mass%, and Mo: 5 mass% or less, where a total of Mn and Ni is 25 mass% or more, may be used.

In the arc spot welding method described above, a welding wire in which X expressed by formula (2) below is -600 or less may be used:

$$X = 521 - 353[C]_W - 22[Si]_W - 24.3[Mn]_W - 7.7[Cu]_W - 17.3[Ni]_W - 17.7[Cr]_W - 25.8[Mo]_W \quad (2)$$

(where $[C]_W$, $[Si]_W$, $[Mn]_W$, $[Cu]_W$, $[Ni]_W$, $[Cr]_W$, and $[Mo]_W$ respectively represent C, Si, Mn, Cu, Ni, Cr, and Mo contents (mass%) in the welding wire).

In the arc spot welding method described above, a welding wire in which Y expressed by formula (3) below is 20 to 100 may be used:

$$Y = [Ni]_W + [Mo]_W + 30[C]_W + 0.5[Mn]_W \quad (3)$$

(where $[Ni]_W$, $[Mo]_W$, $[C]_W$, and $[Mn]_W$ respectively represents Ni, Mo, C, and Mn contents (mass%) in the welding wire.)

In the arc spot welding method described above, a ratio of a Vickers hardness of the weld metal to a Vickers hardness of the steel sheet (Vickers hardness of weld metal/Vickers hardness of steel sheet) may be 0.6 to 1.3.

In the arc spot welding method described above, a heat input may be 5.0 kJ or less.

In the arc spot welding method described above, when arc spot welding is performed on a first steel sheet on an arc exposed side and a second steel sheet that are superimposed on top of each other with a rear surface of the first steel sheet facing a front surface of the second steel sheet, and when a bead diameter of the weld metal on a front surface of the first steel sheet is assumed to be r1 and a bead diameter of the weld metal on the front surface of the second steel sheet is assumed to be r2,

r1, r2, Y, and $Ceq_{BM}$ may satisfy formulae (3) to (5) below:

$$Y = [Ni]_W + [Mo]_W + 30[C]_W + 0.5[Mn]_W \quad (3)$$

(where $[Ni]_W$, $[Mo]_W$, $[C]_W$, and $[Mn]_W$ respectively represent Ni, Mo, C, and Mn contents (mass%) in the welding wire)

$$0.35 \leq (r2/r1) \leq 1.00 \quad (4)$$

$$25 \leq (Y/Ceq_{BM}) \leq 125 \quad (5)$$

The present invention also relates to a welding wire to be used in arc spot welding using a steel sheet having a carbon equivalent $Ceq_{BM}$, which is expressed by formula (1) below, of 0.35 or more and a C content of 0.35 mass% or more, the welding wire containing 30 mass% or more of Ni:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and respectively represent C, Mn, Cu, Ni, Cr, Mo, and V contents (mass%) in the steel sheet).

Furthermore, the present invention also relates to a welding wire to be used in arc spot welding using a steel sheet having a carbon equivalent $Ceq_{BM}$, which is expressed by formula (1) below, of 0.35 or more and a C content of 0.35 mass% or more, the welding wire containing C: 1.5 mass% or less, Si: 0.5 to 0.7 mass%, Mn: 10 to 20 mass%, Ni: less than 30 mass%, Cr: 1 to 5 mass%, and Mo: 5 mass% or less, where a total of Mn and Ni is 25 mass% or more:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[MO]_{BM}$, and respectively represent C, Mn, Cu, Ni, Cr, Mo, and V contents (mass%) in the steel sheet).

Advantageous Effects of Invention

According to the arc spot welding method of the present invention, brittle fracture is prevented and high joint strength can be obtained even when a steel sheet having a high C content is used.

Brief Description of Drawings

Fig. 1 is a schematic cross-sectional view illustrating a direction in which fracture propagates in a welded structure obtained by an arc spot welding method according to one embodiment of the present invention.
Fig. 2 is a schematic cross-sectional view illustrating a direction in which fracture propagates in a welded structure obtained by an arc spot welding method according to one embodiment of the present invention.
Fig. 3 is a schematic diagram illustrating how cross tension testing is carried out.

Description of Embodiments

The embodiments of the present invention will now be described in detail. It should be understood that the present invention is not limited by the embodiments described above. Moreover, in this description, the percentage (mass%) based on mass has the same meaning as the percentage (wt%) based on weight.
The arc spot welding method of this embodiment (hereinafter may also be referred to as the present arc spot welding method) is an arc spot welding method that uses a steel sheet having a carbon equivalent $Ceq_{BM}$, which is expressed by formula (1) below, of 0.35 or more and a C content of 0.35 mass% or more, the method involving forming a weld metal having a structure in which a proportion of an austenite structure is more than 80%.

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and respectively represent C, Mn, Cu, Ni, Cr, Mo, and V contents (mass%) in the steel sheet).
The carbon equivalent $Ceq_{BM}$ and the C content of the base metal are parameters that significantly affect embrittlement of the heat affected zone (HAZ) generated in the base metal. Here, in a steel sheet having a carbon equivalent $Ceq_{BM}$ of 0.35 or more and a C content of 0.35 mass% or more, martensite is generated in the heat affected zone (HAZ) as a result of welding. Since martensite is extremely hard and brittle, martensite is a cause of brittle fracture in the HAZ when a load is applied. The present arc spot welding method aims to prevent brittle fracture and obtain high joint strength even in such cases, and is thus targeted to the cases in which a steel sheet (hereinafter may be referred to as a high-C steel sheet) having a carbon equivalent $Ceq_{BM}$ of 0.35 or more and a C content of 0.35 mass% or more is used as the base metal. Meanwhile, if the carbon equivalent $Ceq_{BM}$ of the steel sheet is less than 0.35 and/or the C content is less than 0.35 mass%, precipitation of martensite in the HAZ is decreased, and thus brittle fracture in the HAZ is suppressed when a load is applied; however, high strength cannot be obtained.
In order to achieve the object described above, in the present arc spot welding method, a weld metal having a structure mainly composed of an austenite structure is formed. Here, the weld metal having a structure mainly composed of an austenite structure refers to a weld metal in which the proportion of the austenite structure in the weld metal structure exceeds 80%. In this embodiment, the proportion of the austenite structure in the weld metal structure is preferably 90% or more. The proportion of the austenite structure in the weld metal structure is more preferably 100%, which is the upper limit. In other words, the entire structure of the weld metal is more preferably composed of an austenite structure. Here, the proportion of the austenite structure in the weld metal structure is the area ratio, and is measured by observation of crystal orientations through EBSD. The observation range of the EBSD is set to be $200 \times 200 \ \mu m$, and the proportion of the austenite structure is calculated from a phase map.
Unlike a martensite structure, the austenite structure is soft and highly ductile. Thus, a weld metal having a structure mainly composed of an austenite structure does not undergo brittle fracture but ductile fracture (weld metal fracture) through which the weld metal plastically deforms and fractures. Thus, according to the present arc spot welding method, brittle fracture is prevented and the joint strength can be increased due to high ductility of the weld metal having a structure mainly composed of the austenite structure even when a high-C steel sheet is used. Meanwhile, when the proportion of structures other than the austenite structure, such as a δ ferrite structure and a martensite structure, is more than 20% (in a section for macroscopic observation) in the weld metal structure, crystal grain coarsening and an excessive increase in weld metal hardness work as factors that preclude plastic deformation of the weld metal and causes brittle fracture at the welding junction upon application of a load. As with the austenite structure, the proportion of structures other than the austenite structure in the weld metal structure is measured by observation of crystal orientations through EBSD.

In the present arc spot welding method, the technique for forming the weld metal having a structure mainly composed of an austenite structure is not particularly limited, but, for example, the use of a welding wire having a particular composition, control of the cooling rate and heat input, and a shield gas composition are contributing factors.

An example of the welding wire suitable for forming a weld metal having a structure mainly composed of an austenite structure is a welding wire containing 30 mass% or more of Ni (hereinafter, this wire may be referred to as the Ni wire of this embodiment). In the description below, the wire composition of the Ni wire of this embodiment is described.

Nickel (Ni) is an austenite-stabilizing element, and the higher the Ni content, the higher the stability with which the austenite structure can be generated. In the Ni wire of this embodiment, in order to suppress the proportion of the structures other than austenite, such as ferrite and martensite, in the weld metal structure to less than 20% and to form a weld metal having a structure mainly composed of austenite, the Ni content in the wire is preferably set to at least 30 mass% or more. The Ni content of the Ni wire of this embodiment is more preferably 50 mass% or more and yet more preferably 70 mass% or more. Moreover, the upper limit of the Ni content is not particularly limited, and may be, for example, 100 mass%.

The chemical components other than Ni contained in the Ni wire of this embodiment are not particularly limited, and examples thereof include optional components such as C, Si, Mn, Cu, Cr, Mo, V, and Co, the balance composed of Fe, and unavoidable impurities such as P and S. Cu described above includes Cu used in plating.

Another example of the welding wire suitable for forming a weld metal having a structure mainly composed of an austenite structure although the Ni content is less than 30 mass% is a welding wire (hereinafter, this wire may be referred to as the wire of this embodiment having a Ni content of less than 30 mass%) that contains C: 1.5 mass% or less, Si: 0.5 to 0.7 mass%, Mn: 10 to 20 mass%, Ni: less than 30 mass%, Cr: 1 to 5 mass%, and Mo: 5 mass% or less, where the total of Mn and Ni is 25 mass% or more. In a typical wire, such as YGW15, YGW18, or YGW19, the Mn content in the wire is set to 2.0 mass% or less, but the wire of this embodiment having a Ni content of less than 30 mass% is a high-Mn-content wire with a Mn content of 10 mass% or more. The composition of the wire of this embodiment having a Ni content of less than 30 mass% is described below.

Carbon (C) is an element that stabilizes austenite but is also an element that generates carbides in the weld metal, induces martensite transformation of the weld metal, and accelerates embrittlement of the weld metal. Thus, the lower limit is not particularly limited. However, at a C content more than 1.5 mass%, martensite and carbides occur in the weld metal structure, and embrittlement of the weld metal may result. Thus, the C content in the wire of this embodiment having a Ni content of less than 30 mass% is preferably limited to 1.5 mass% or less.

Silicon (Si) is a ferrite-stabilizing element but is an element used in deoxidation and improvement of the bead shape; thus, addition of Si to the welding wire is essential. At a Si content of less than 0.5 mass%, the deoxidizing effect does not sufficiently occur and defects may be generated in the weld metal; thus, the Si content in the wire of this embodiment having a Ni content of less than 30 mass% is preferably 0.5 mass% or more. Meanwhile, at a Si content exceeding 0.7 mass%, δ ferrite may form in the weld metal and crystal grains may coarsen; thus, the Si content in the wire of this embodiment having a Ni content of less than 30 mass% is preferably 0.7 mass% or less.

Manganese (Mn) is an austenite stabilizing element as with C, also has an effect of increasing the amount of dissolved N, which has an effect of stabilizing the austenite phase in the matrix, and is an essential element in the welding wire of this embodiment having a Ni content of less than 30 mass%. In addition, Mn has effects of softening the steel and improving plastic workability. In order to obtain these effects, the Mn content in the wire of this embodiment having a Ni content of less than 30 mass% is preferably set to 10 to 20 mass%. The Mn content is preferably 13 mass% or more and preferably 16 mass% or less. The total of Mn and Ni, which is an austenite stabilizing element, is preferably 25 mass% or more for stabilizing the austenite structure. At a Mn content of less than 10 mass%, the weld metal does not obtain sufficient plastic deformability, and thus may undergo brittle fracture.

Chromium (Cr) is a ferrite stabilizing element, and the weldability can be improved by adding 5 mass% or less of Cr. Meanwhile, at a Cr content exceeding 5 mass%, generation of the δ ferrite structure and precipitation of chromium carbides in the structure may cause embrittlement. Thus, in the welding wire of this embodiment having a Ni content of less than 30 mass%, the Cr content is preferably 5 mass% or less and more preferably 4 mass% or less. At a Cr content of less than 1 mass%, carbon may form in the weld metal in addition to chromium carbides, and thus, the Cr content in the welding wire of this embodiment having a Ni content of less than 30 mass% is preferably 1 mass% or more and more preferably 2 mass% or more.

As with Cr, molybdenum (Mo) is a ferrite stabilizing element, and the weldability can be improved by adding 5 mass% or less of Mo. Meanwhile, at a Mo content exceeding 5 mass%, the hardness of the weld metal may increase excessively or precipitation of molybdenum carbides in the structure may cause embrittlement. Thus, in the welding wire of this embodiment having a Ni content of less than 30 mass%, the Mo content is preferably 5 mass% or less and more preferably 3 mass% or less. Moreover, the wire of this embodiment having a Ni content of less than 30 mass% does not have to contain Mo, but if Mo is to be contained, the lower limit of the Mo content is, for example, 1 mass%.

The wire of this embodiment having a Ni content of less than 30 mass% may further contain optional components, such as Cu, V, and Co, in addition to the chemical components described above. The balance may be Fe and unavoidable impurities such as P and S. Cu described above includes Cu used in plating.

In the present arc spot welding method, a welding wire in which X expressed by formula (2) below is -600 or less is preferably used.

$$X = 521 - 353[C]_W - 22[Si]_W - 24.3[Mn]_W - 7.7[Cu]_W - 17.3[Ni]_W - 17.7[Cr]_W - 25.8[Mo]_W \quad (2)$$

(where $[C]_W$, $[Si]_W$, $[Mn]_W$, $[Cu]_W$, $[Ni]_W$, $[Cr]_W$, and $[Mo]_W$ respectively represent C, Si, Mn, Cu, Ni, Cr, and Mo contents (mass%) in the welding wire.)

The value of X expressed by formula (2) serves as a parameter for the martensite transformation start temperature. When a welding wire with X of -600 or less is used, it becomes possible to suppress the proportion of precipitated structures other than the austenite structure, such as a δ ferrite structure and a martensite structure, in the weld metal. Thus, in the present arc spot welding method, X of the welding wire used is preferably -600 or less, more preferably -800 or less, and yet more preferably -1000 or less. Note that the lower limit of X of the welding wire used is not particularly limited, and is, for example, -1300 or more.

In the present arc spot welding method, a welding wire in which Y expressed by formula (3) below is 20 to 100 is preferably used.

$$Y = [Ni]_W + [Mo]_W + 30[C]_W + 0.5[Mn]_W \quad (3)$$

(where $[Ni]_W$, $[Mo]_W$, $[C]_W$, and $[Mn]_W$ respectively represent Ni, Mo, C, and Mn contents (mass%) in the welding wire.)

The value of Y expressed by formula (3) serves as a parameter that indicates the austenite stability in terms of the chemical composition. As long as Y is 20 or more, the main structure of the weld metal is austenite, and it becomes possible to suppress the proportion of precipitated structures other than the austenite structure, such as a ferrite structure and a martensite structure, in the weld metal to less than 20%. Thus, in the present arc spot welding method, Y of the welding wire used is preferably 20 or more and more preferably 50 or more. Meanwhile, as long as Y is 100 or less, the proportion of austenite contained in the weld metal can be controlled to 90% or more per cross-sectional area. Thus, in the present arc spot welding method, the maximum value of Y of the welding wire used is preferably 100 or less.

In the present arc spot welding method, the ratio of the Vickers hardness of the weld metal to the Vickers hardness of the steel sheet (Vickers hardness of weld metal/Vickers hardness of steel sheet) is preferably 0.6 to 1.3.

In order to obtain high joint strength, it is necessary at the time of load application that plastic deformation of the weld metal occur simultaneously with sufficient plastic deformation of the base metal. In order to induce plastic deformation in both the weld metal and the steel sheet (base metal), the (Vickers hardness of weld metal/Vickers hardness of steel sheet) ratio (hereinafter this ratio may be referred to as the hardness ratio) is preferably in the range of 0.6 to 1.3.

When the hardness ratio is less than 0.6 and stress is applied, the weld metal selectively undergoes plastic deformation but the base metal rarely deforms. In this case, brittle fracture at the welding junction can be suppressed, but tensile stress concentrates on the weld metal only, and thus maximum joint strength cannot be obtained. Thus, the hardness ratio is preferably 0.6 or more and more preferably 0.7 or more.

Meanwhile, when the hardness ratio exceeds 1.3, the weld metal is harder than the base metal, and thus the weld metal hardly undergoes plastic deformation. When the weld metal does not deform, the stress concentrates on the welding junction, which is the interface between the weld metal and the base metal. The welding junction is the interface between the base metal structure and the weld metal, and is also a heat affected zone (HAZ) region; thus, the welding junction has a martensite structure formed therein and is brittle. At a hardness ratio exceeding 1.3, fracture occurs in this welding junction, and thus, the hardness ratio is preferably 1.3 or less and more preferably 1.0 or less.

In the present arc spot welding method, from the viewpoint of suppressing brittle fracture, the Vickers hardness of the weld metal is preferably 250 or less and more preferably 200 or less.

In the present arc spot welding method, the welding conditions such as heat input, welding method, and shield gas are not particularly limited, and may be appropriately adjusted within the range that does not obstruct the effects of the present invention.

Although the heat input is not particularly limited, increasing the heat input increases the amount of martensite generated in the welding junction between the base metal and the weld metal and in the HAZ, and accelerates embrittlement; thus, in the present arc spot welding method, the heat input is preferably 5.0 kJ or less and more preferably 3.0 kJ or less. The lower limit of the heat input is not particularly limited, but with a 1.2 mm steel sheet, for example, the lower limit is preferably 2.0 kJ or more.

The present arc spot welding method may be MAG welding, MIG welding, TIG welding, or any other welding.

The shield gas can be appropriately selected from known gases, such as an inert gas such as Ar and He, $CO_2$, and a mixture gas of an inert gas and $CO_2$, according to the type of welding, such as MAG welding, MIG welding, and TIG welding.

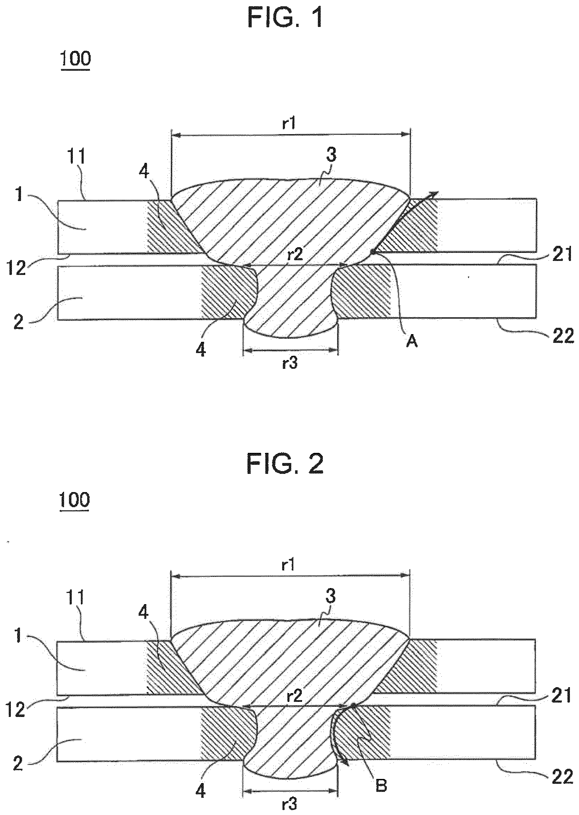

Referring to Figs. 1 and 2, in the present arc spot welding method, when arc spot welding is performed on a first steel sheet 1 on an arc exposed side and a second steel sheet 2 that are superimposed on top of each other with a rear surface 12 of the first steel sheet 1 facing a front surface 21 of the second steel sheet 2, and when a bead diameter of a weld metal 3 on a front surface 11 of the first steel sheet 1 is assumed to be r1 and a bead diameter of the weld metal 3 on the front surface 21 of the second steel sheet 2 is assumed to be r2, r1, r2, Y, and $Ceq_{BM}$ preferably satisfy formulae (3) to (5) below. The reasons that this embodiment is preferred are described below.

$$Y = [Ni]_W + [Mo]_W + 30[C]_W + 0.5[Mn]_W \quad (3)$$

(where $[Ni]_W$, $[Mo]_W$, $[C]_W$, and $[Mn]_W$ respectively represent Ni, Mo, C, and Mn contents (mass%) in the welding wire.)

$$0.35 \leq (r2/r1) \leq 1.00 \quad (4)$$

$$25 \leq (Y/Ceq_{BM}) \leq 125 \quad (5)$$

Moreover, when the bead diameter of the weld metal 3 on a rear surface 22 of the second steel sheet 2 is assumed to be r3 and formula (6) below is satisfied, a more appropriate joint strength can be obtained, and thus this is more preferable.

$$0.5 \leq (r2/r3) \leq 3.0 \quad (6)$$

The shape of the weld metal 3 is a factor that determines where the stress concentrates when a tensile load is applied, and is an important factor that contributes to the position of fracture. Here, r2/r1 in formula (4) and r2/r3 in formula (6) serve as parameters for the fractured part and the fracture propagation direction.

$$< 0.35 \leq (r2/r1) \leq 1.00 \quad (4) >$$

In this embodiment, when r2/r1 is less than 0.35 or exceeds 1.00, such a shape is formed that stress concentrates in the welding junction (weld metal 3-HAZ 4) on the first steel sheet 1 side indicated by point A in Fig. 1; thus, when tensile stress is applied, the point A serves as a starting point of the fracture, and fracture occurs in the HAZ 4 on the first steel sheet 1 side. In this case, the direction of the arrow in Fig. 1 is the fracture propagation direction. In order to alleviate such stress concentration, r2/r1 is preferably within the range of 0.35 to 1.00 and more preferably within the range of 0.5 to 0.8.

$$< 0.5 \leq (r2/r3) \leq 3.0 \quad (6) >$$

In this embodiment, when r2/r3 is less than 0.5 or exceeds 3.0, such a shape is formed that stress concentrates in the welding junction (weld metal 3-HAZ 4) on the second steel sheet 2 side indicated by point B in Fig. 2; thus, when tensile stress is applied, the point B serves as a starting point of the fracture, and fracture occurs in the HAZ 4 on the second steel sheet 2 side. In this case, the direction of the arrow in Fig. 2 is the fracture propagation direction. In order to alleviate such stress concentration, r2/r3 is preferably within the range of 0.5 to 3.0 and more preferably within the range of 1.0 to 2.0.

$$< Y = [Ni]_W + [Mo]_W + 30[C]_W + 0.5[Mn]_W \quad (3) >$$

$$< 25 \leq (Y/Ceq_{BM}) \leq 125 \quad (5) >$$

The value of Y expressed by formula (3) serves as a parameter that indicates the austenite stability in terms of the chemical composition, as described above. The ratio ($Y/Ceq_{BM}$) of Y to the carbon equivalent $Ceq_{BM}$ of the steel sheet serves as a parameter that determines whether weld metal fracture or welding junction fracture will occur and also serves as a parameter for determining whether a sufficient joint strength is obtained.

In this embodiment, when the ratio ($Y/Ceq_{BM}$) of Y to the carbon equivalent $Ceq_{BM}$ of the steel sheet is less than 25, embrittlement occurs in the welding junction although the weld metal structure is mainly composed of austenite, and application of tensile stress causes fracture at the welding junction; thus, it becomes difficult to obtain sufficient joint strength. Thus, in this embodiment, $Y/Ceq_{BM}$ is preferably 25 or more and more preferably 60 or more.

Meanwhile, in this embodiment, when $Y/Ceq_{BM}$ exceeds 125, brittle fracture does not occur in the welding junction, and weld metal fracture occurs; however, tensile stress is selectively applied to the weld metal formed of an austenite structure, resulting in fracture. Thus, sufficient joint strength is not obtained. Thus, in this embodiment, $Y/Ceq_{BM}$ is preferably 125 or less and more preferably 100 or less.

As described in detail above, according to the arc spot welding method of this embodiment, brittle fracture is prevented and high joint strength can be obtained even when a steel sheet having a high C content is used. Moreover, the Ni wire and the wire having a Ni content of less than 30 mass% are suitable for use in arc spot welding that uses a steel sheet with a high C content.

EXAMPLES

The present invention will now be specifically described through examples below; however, the present invention is not limited by these examples and can be modified within the range that conforms to the gist of the present invention and implemented. All of such modifications are included in the technical scope of the present invention.

First, the composition, the carbon equivalent $Ceq_{BM}$ expressed by formula (1) below, and the Vickers hardness Hv of the steel sheet used are indicated in Table 1. The Vickers hardness of the steel sheet (BM HV) is measured with a Vickers hardness tester.

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and $[V]_{BM}$ respectively represent C, Mn, Cu, Ni, Cr, Mo, and V contents (mass%) in the steel sheet).

[Table 1]

Table 1

| Steel type | C | Si | Mn | Cu | Ni | Cr | Mo | V | $Ceq_{BM}$ | BM Hv |
|---|---|---|---|---|---|---|---|---|---|---|
| A | 0.35 | 0.28 | 0.75 | 0.05 | 0.06 | 0.02 | 0.02 | 0.003 | 0.49 | 180.00 |
| B | 0.35 | 1.55 | 2.24 | 0.08 | 0.03 | 0.06 | 0.01 | 0.003 | 0.80 | 220.00 |
| C | 0.65 | 0.22 | 0.75 | 0.05 | 0.04 | 0.01 | 0.03 | 0.005 | 0.79 | 250.00 |
| D | 0.65 | 1.68 | 2.01 | 0.05 | 0.04 | 0.01 | 0.03 | 0.005 | 1.06 | 350.00 |
| E | 0.08 | 0.28 | 0.75 | 0.05 | 0.06 | 0.02 | 0.02 | 0.003 | 0.22 | 208.00 |
| F | 1.05 | 0.28 | 0.75 | 0.05 | 0.06 | 0.02 | 0.02 | 0.003 | 1.19 | 450.00 |

The amounts of components in Table 1 are in mass%.

(Samples 1 to 53)

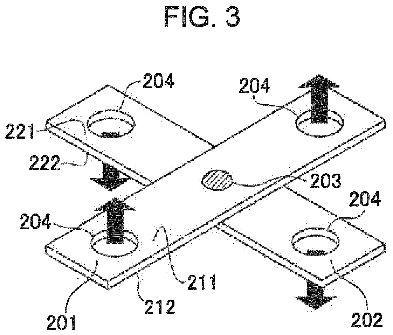

For each sample, two steel sheets, which were composed of the steel type shown in Tables 2 and 3, had a thickness shown in Tables 2 and 3, and had holes formed therein (holes 204), were arc-spot-welded under the welding conditions shown in Tables 2 and 3 so as to form a test piece having a shape illustrated in Fig. 3. The upper sheet was assumed to be a first steel sheet 201, the lower sheet was assumed to be a second steel sheet 202, and an arc (not illustrated) was applied from a surface 211 of the first steel sheet 201. For the test pieces prepared, the first steel sheet 201 and the second steel sheet 202 were pulled in the directions of the arrows in Fig. 3 so as to perform CTS (cross tensile testing). The test pieces that exhibited a fracture load of 7 kN or more were rated ⊙, the test pieces that exhibited a fracture load of 5 kN or more and less than 7 kN were rated ○, and the test pieces that exhibited a fracture load of 5 kN or less were rated ×. Here, the ratings ⊙ and ○ are acceptable. The evaluation results are indicated in Table 3.

The welding conditions were a welding current of 200 to 300 A and an arc voltage of 15 to 20 V, and the heat input described in Tables 2 and 3 was calculated by the calculation formula: heat input (kJ) = welding current (A) × arc voltage (V)/1000. In addition, the type of shield gas and the process are also indicated in Tables 2 and 3. Note that, in the "Process" column, "Pulse", "Short-circuiting", and "Wire feed control" are defined as follows.

Pulse: Welding was performed by using a pulse power supply under the conditions of base current: 400 A, peak current: 40 A, and peak time: 3.5 msec.

Short-circuiting: Welding was performed by using a DC power supply under conditions of welding current: 230 A and arc voltage: 22 V while repeating the short-circuiting state in which the wire contacts the base metal and the arc state.

Wire feed control: Welding was performed under the conditions of welding current: 220 A and arc voltage: 22.6 V while conducting wire forward feeding and backward feeding according to the welding condition so that backward feeding was conducted when the welding state entered the short circuiting state and forward feeding was conducted when the welding state entered the arc state.

The amounts of the wire components in terms of mass% are indicated in Tables 2 and 3. In addition, X expressed by formula (2) below and Y expressed by formula (3) below are calculated and indicated in Tables 2 and 3. In Tables 2 and 3, "Others" of the wire component indicates the total amount of optional components, such as Cu, V, and Co, other than the components described in Tables 2 and 3. Moreover, "0" for the wire component content in Tables 2 and 3 indicates that the amount of that component is not more than the amount at which that component is considered to be an unavoidable impurity.

$$X = 521 - 353[C]_W - 22[Si]_W - 24.3[Mn]_W - 7.7[Cu]_W - 17.3[Ni]_W - 17.7[Cr]_W - 25.8[Mo]_W \quad (2)$$

(where $[C]_W$, $[Si]_W$, $[Mn]_W$, $[Cu]_W$, $[Ni]_W$, $[Cr]_W$, and $[Mo]_W$ respectively represent C, Si, Mn, Cu, Ni, Cr, and Mo contents (mass%) in the welding wire.)

$$Y = [Ni]_W + [Mo]_W + 30[C]_W + 0.5[Mn]_W \quad (3)$$

(where $[Ni]_W$, $[Mo]_W$, $[C]_W$, and $[Mn]_W$ respectively represent Ni, Mo, C, and Mn contents (mass%) in the welding wire.)

Furthermore, the carbon equivalent Ceqw of the welding wire used in each sample was calculated by using formula (7) below, and is indicated in Table 2.

$$Ceqw = [C]_W + [Mn]_W/6 + ([Cu]_W + [Ni]_W)/15 + ([Cr]_W + [Mo]_W)/5 \quad (7)$$

(where $[C]_W$, $[Mn]_W$, $[Cu]_W$, $[Ni]_W$, $[Cr]_W$, and $[Mo]_W$ respectively represent C, Mn, Cu, Ni, Cr, and Mo contents (mass%) in the welding wire).

When arc spot welding was performed on the first steel sheet 201 on an arc exposed side and the second steel sheet 202 that were superimposed on top of each other with the rear surface 212 of the first steel sheet 201 facing a front surface 221 of the second steel sheet 202, and when a bead diameter of the weld metal 203 on the front surface 211 of the first steel sheet 201 was assumed to be r1 (mm), a bead diameter of the weld metal 203 on the front surface 221 of the second steel sheet 202 was assumed to be r2 (mm), and a bead diameter of the weld metal 203 on the rear surface 222 of the second steel sheet 202 was assumed to be r3 (mm), r1, r2, and r3 are shown in Tables 4 and 5.

Moreover, r1/r2 and r3/r2 were calculated and indicated in Tables 4 and 5.

In addition, the ratio ($Y/Ceq_{BM}$) of Y expressed by formula (3) above to $Ceq_{BM}$ expressed by formula (1) above and the ratio ($Ceq_W/Ceq_{BM}$) of Ceqw expressed by formula (7) above to $Ceq_{BM}$ expressed by formula (1) above were calculated and indicated in Tables 4 and 5.

The Vickers hardness (WM Hv) of the weld metal and the Vickers hardness (BM Hv) of the steel sheet serving as the base metal are indicated in Tables 4 and 5. The Vickers hardness (WM Hv) of the weld metal was measured with a Vickers hardness tester in the same manner as measuring the Vickers hardness (BM Hv) of the steel sheet. Furthermore, the ratio (WM Hv/BM Hv) of the Vickers hardness of the weld metal (WM Hv) to the Vickers hardness (BM Hv) of the steel sheet was calculated, and is indicated in Tables 4 and 5.

For the weld metal structure of each sample, crystal orientation was observed through EBSD so as to determine the proportions of the austenite structure and structures other than austenite in the weld metal structure (the ratio in terms of area ratio). The observation range of the EBSD was set to be 200 $\times$ 200 $\mu$m, and the proportions of the austenite structure and the structures other than austenite were calculated from a phase map. Tables 4 and 5 show the proportion of the structures other than austenite in the weld metal structure. The proportion of the austenite structure in the weld metal structure is {100 - (proportion of structures other than austenite in weld metal structure)} (%).

[Table 2]

Table 2

| No | Welding conditions | | | Steel sheet | | Wire components (mass%) (balance: Fe and unavoidable impurities) | | | | | | | Wire properties | | |
|---|---|---|---|---|---|---|---|---|---|---|---|---|---|---|---|
| | Heat input | Gas type | Process | Steel type | Sheet thickness | C | Si | Mn | Cr | Mo | Others | Ni | Y | Ceq | X |
| 1 | 2.5 | 20%CO2 | Pulse | B | 1.6 | 0.02 | 0.02 | 0.02 | 2 | 19 | 0 | 70 | 70.61 | 8.89 | -1223.59 |
| 2 | 2.5 | 20%CO2 | Pulse | B | 1.6 | 0.02 | 0.03 | 2 | 5 | 10 | 0 | 80 | 81.6 | 8.69 | -1265.82 |
| 3 | 2.5 | 20%CO2 | Pulse | B | 1.6 | 0 | 0 | 0 | 0 | 0 | 0 | 100 | 100 | 6.67 | -1209.00 |
| 4 | 2.5 | 20%CO2 | Pulse | B | 1.6 | 0.01 | 0.1 | 2.73 | 7.7 | 19 | 0 | 50 | 51.665 | 9.14 | -1042.56 |
| 5 | 2.5 | 20%CO2 | Pulse | B | 1.6 | 0.02 | 0.21 | 2.75 | 6.9 | 17.6 | 2.4 | 60 | 61.975 | 9.38 | -1171.72 |
| 6 | 2.5 | 20%CO2 | Pulse | B | 1.6 | 0.02 | 0.21 | 2.75 | 2 | 5 | 2.4 | 30 | 31.975 | 3.88 | -240.91 |
| 7 | 2.5 | 20%CO2 | Pulse | B | 1.6 | 0.4 | 0.5 | 13 | 1 | 0 | 2.4 | 9 | 27.5 | 3.37 | -120.50 |
| 8 | 2.5 | 20%CO2 | Pulse | B | 1.6 | 1.5 | 0.7 | 16 | 5 | 3 | 2.4 | 15 | 68 | 6.77 | -838.10 |
| 9 | 2.5 | 20%CO2 | Pulse | B | 1.6 | 0.02 | 0.02 | 0.02 | 2 | 19 | 0 | 70 | 70.61 | 8.89 | -1223.59 |
| 10 | 5 | 20%CO2 | Pulse | B | 1.6 | 0.02 | 0.02 | 0.02 | 2 | 19 | 0 | 70 | 70.61 | 8.89 | -1223.59 |
| 11 | 5.5 | 20%CO3 | Pulse | B | 1.6 | 0.02 | 0.02 | 0.02 | 2 | 19 | 0 | 70 | 70.61 | 8.89 | -1223.59 |
| 12 | 0.5 | 20%CO2 | Pulse | B | 1.6 | 0.02 | 0.02 | 0.02 | 2 | 19 | 0 | 70 | 70.61 | 8.89 | -1223.59 |
| 13 | 2.5 | 100%CO2 | Pulse | B | 1.6 | 0.02 | 0.02 | 0.02 | 2 | 19 | 0 | 70 | 70.61 | 8.89 | -1223.59 |
| 14 | 2.5 | 30%CO2 | Pulse | B | 1.6 | 0.02 | 0.02 | 0.02 | 2 | 19 | 0 | 70 | 70.61 | 8.89 | -1223.59 |
| 15 | 2.5 | 10%CO2 | Pulse | B | 1.6 | 0.02 | 0.02 | 0.02 | 2 | 19 | 0 | 70 | 70.61 | 8.89 | -1223.59 |
| 16 | 2.5 | 1%CO2 | Pulse | B | 1.6 | 0.02 | 0.02 | 0.02 | 2 | 19 | 0 | 70 | 70.61 | 8.89 | |
| 17 | 2.5 | 8%CO2+2%O2 | Pulse | B | 1.6 | 0.02 | 0.02 | 0.02 | 2 | 19 | 0 | 70 | 70.61 | 8.89 | -1223.59 |
| 18 | 2.5 | 20%CO2 | Short-circuiting | B | 1.6 | 0.02 | 0.02 | 0.02 | 2 | 19 | 0 | 70 | 70.61 | 8.89 | -1223.59 |
| 19 | 2.5 | 20%CO2 | Pulse | B | 1.6 | 0.02 | 0.02 | 0.02 | 2 | 19 | 0 | 70 | 70.61 | 8.89 | -1223.59 |
| 20 | 2.5 | 20%CO2 | Wire feed control | B | 1.6 | 0.02 | 0.02 | 0.02 | 2 | 19 | 0 | 70 | 70.61 | 8.89 | -1223.59 |

EP 3 498 874 A1

11

(continued)

| No | Welding conditions | | | Steel sheet | | Wire components (mass%) (balance: Fe and unavoidable impurities) | | | | | | | Wire properties | | |
|---|---|---|---|---|---|---|---|---|---|---|---|---|---|---|---|
| | Heat input | Gas type | Process | Steel type | Sheet thickness | C | Si | Mn | Cr | Mo | Others | Ni | Y | Ceq | X |
| 21 | 2.5 | 20%CO2 | Pulse | B | 1.6 | 0.02 | 0.02 | 0.02 | 2 | 19 | 0 | 70 | 70.61 | 8.89 | -1223.59 |
| 22 | 2.5 | 20%CO2 | Pulse | B | 1.6 | 0.02 | 0.02 | 0.02 | 2 | 19 | 0 | 70 | 70.61 | 8.89 | -1223.59 |
| 23 | 2.5 | 20%CO2 | Pulse | B | 1.6 | 0.02 | 0.02 | 0.02 | 2 | 19 | 0 | 70 | 70.61 | 8.89 | -1223.59 |
| 24 | 2.5 | 20%CO2 | Pulse | B | 1.6 | 0.02 | 0.02 | 0.02 | 2 | 19 | 0 | 70 | 70.61 | 8.89 | -1223.59 |
| 25 | 2.5 | 20%CO2 | Pulse | B | 1.6 | 0.02 | 0.02 | 0.02 | 2 | 0.5 | 0 | 70 | 70.61 | 5.19 | -746.29 |
| 26 | 2.5 | 20%CO2 | Pulse | A | 1.6 | 0.02 | 0.02 | 0.02 | 2 | 0.5 | 0 | 70 | 70.61 | 5.19 | -746.29 |
| 27 | 2.5 | 20%CO2 | Pulse | C | 1.6 | 0.02 | 0.02 | 0.02 | 2 | 19 | 0 | 70 | 70.61 | 8.89 | -1223.59 |
| 28 | 2.5 | 20%CO2 | Pulse | D | 1.6 | 0.02 | 0.02 | 0.02 | 2 | 19 | 0 | 70 | 70.61 | 8.89 | -1223.59 |
| 29 | 2.5 | 20%CO2 | Pulse | F | 1.6 | 0.02 | 0.02 | 0.02 | 2 | 0 | 0 | 70 | 70.61 | 5.09 | -733.39 |
| 30 | 0.5 | 20%CO2 | Pulse | B | 0.8 | 0.02 | 0.02 | 0.02 | 2 | 0 | 0 | 70 | 70.61 | 5.09 | -733.39 |
| 31 | 2.5 | 20%CO2 | Pulse | B | 1.6 | 0.02 | 0.6 | 13 | 4 | 19 | 0 | 15 | 22.1 | 7.79 | -635.66 |
| 32 | 2.5 | 20%CO2 | Pulse | B | 1.6 | 0.02 | 0.02 | 10 | 2 | 19 | 0 | 10 | 15.6 | 6.55 | -428.10 |
| 33 | 5 | 20%CO2 | Pulse | B | 3.2 | 0.02 | 0.02 | 0.02 | 2 | 19 | 0 | 70 | 70.61 | 8.89 | -1223.59 |

[Table 3]

[Table 3]

Table 3

| No | Welding conditions | | | Steel sheet | | Wire components (mass%) (balance: Fe and unavoidable impurities) | | | | | | | Wire properties | | |
|---|---|---|---|---|---|---|---|---|---|---|---|---|---|---|---|
| | Heat input | Gas type | Process | Steel type | Sheet thickness | C | Si | Mn | Cr | Mo | Others | Ni | Y | Ceq | X |
| 34 | 2.5 | 20%CO2 | Pulse | B | 1.6 | 0.02 | 0.02 | 0.02 | 2 | 19 | 0 | 29 | 29.61 | 6.16 | -514.29 |
| 35 | 2.5 | 20%CO2 | Pulse | B | 1.6 | 0.8 | 0.02 | 0.02 | 2 | 19 | 0 | 5 | 29.01 | 5.34 | -374.43 |
| 36 | 0.3 | 20%CO2 | Pulse | B | 1.6 | 0.02 | 0.02 | 0.02 | 2 | 19 | 0 | 70 | 29.61 | 8.89 | -1223.59 |
| 37 | 8 | 20%CO2 | Pulse | B | 1.6 | 0.02 | 0.02 | 0.02 | 2 | 19 | 0 | 70 | 70.61 | 8.89 | -1223.59 |
| 38 | 10 | 20%CO2 | Pulse | B | 1.6 | 0.02 | 0.02 | 0.02 | 2 | 19 | 0 | 70 | 70.61 | 8.89 | -1223.59 |
| 39 | 2.5 | 20%CO2 | Pulse | B | 1.6 | 0.38 | 0.5 | 13 | 1 | 0 | 2.4 | 15 | 32.9 | 3.75 | -217.24 |
| 40 | 2.5 | 20%CO2 | Pulse | B | 1.6 | 2 | 0.7 | 16 | 5 | 3 | 2.4 | 15 | 83 | 7.27 | -1014.60 |
| 41 | 2.5 | 20%CO2 | Pulse | B | 1.6 | 1.5 | 0.3 | 13 | 1 | 0 | 2.4 | 9 | 60.5 | 4.47 | -504.40 |
| 42 | 2.5 | 20%CO2 | Pulse | B | 1.6 | 1.5 | 1.3 | 13 | 1 | 0 | 2.4 | 9 | 60.5 | 4.47 | -526.40 |
| 43 | 2.5 | 20%CO2 | Pulse | B | 1.6 | 1.4 | 0.5 | 5 | 1 | 0 | 2.4 | 9 | 53.5 | 3.03 | -279.10 |
| 44 | 2.5 | 20%CO2 | Pulse | B | 1.6 | 0.4 | 0.7 | 23 | 5 | 3 | 2.4 | 15 | 38.5 | 6.83 | -619.90 |
| 45 | 2.5 | 20%CO2 | Pulse | B | 1.6 | 1.2 | 0.7 | 13 | 5 | 3 | 2.4 | 8 | 50.5 | 5.50 | -538.20 |
| 46 | 2.5 | 20%CO2 | Pulse | B | 1.6 | 0.4 | 0.7 | 13 | 5 | 3 | 2.4 | 23 | 41.5 | 5.70 | -515.30 |
| 47 | 2.5 | 20%CO2 | Pulse | B | 1.6 | 1.3 | 0.7 | 13 | 0 | 3 | 2.4 | 15 | 60.5 | 5.07 | -606.10 |
| 48 | 2.5 | 20%CO2 | Pulse | B | 1.6 | 1 | 0.7 | 13 | 8 | 3 | 2.4 | 15 | 51.5 | 6.37 | -641.80 |
| 49 | 2.5 | 20%CO2 | Pulse | B | 1.6 | 0.07 | 0.82 | 1.4 | 0.03 | 0.03 | 0 | 0.03 | 2.83 | 0.32 | 442.18 |
| 50 | 2.5 | 20%CO2 | Pulse | E | 1.6 | 0.02 | 0.02 | 0.02 | 2 | 19 | 0 | 70 | 70.61 | 8.89 | -1223.59 |
| 51 | 2.5 | 20%CO2 | Pulse | B | 1.6 | 0.02 | 0.52 | 1.45 | 0.05 | 0.07 | 0 | 0 | 1.40 | 0.29 | 464.57 |
| 52 | 2.5 | 20%CO2 | Pulse | B | 1.6 | 0.02 | 0.78 | 1.67 | 0.09 | 0.12 | 0 | 0 | 1.56 | 0.34 | 451.51 |
| 53 | 2.5 | 20%CO2 | Pulse | B | 1.6 | 0.02 | 0.66 | 1.88 | 0.03 | 0.33 | 0 | 0 | 1.87 | 0.41 | 444.69 |

EP 3 498 874 A1

[Table 4]

Table 4

| No | Weld metal section distances | | | | | Y/Ceq$_{BM}$ | Ceq$_W$/Ceq$_{BM}$ | WM Hv | BM Hv | WM Hv/BM Hv | Proportion of structure other than austenite | CTS |
|---|---|---|---|---|---|---|---|---|---|---|---|---|
| | r1 | r2 | r3 | r2/r1 | r2/r3 | | | | | | | |
| 1 | 11.5 | 4.5 | 3 | 0.39 | 1.50 | 88.1 | 11.1 | 260 | 220 | 1.18 | 0 | ⊙ |
| 2 | 11.5 | 4.5 | 3 | 0.39 | 1.50 | 101.8 | 10.8 | 218 | 220 | 0.99 | 0 | ⊙ |
| 3 | 11.5 | 4.5 | 3 | 0.39 | 1.50 | 124.8 | 8.3 | 233 | 220 | 1.06 | 0 | ⊙ |
| 4 | 11.5 | 4.5 | 3 | 0.39 | 1.50 | 64.5 | 11.4 | 210 | 220 | 0.95 | 2 | ⊙ |
| 5 | 11.5 | 4.5 | 3 | 0.39 | 1.50 | 77.3 | 11.7 | 235 | 220 | 1.07 | 1 | ⊙ |
| 6 | 11.5 | 4.5 | 3 | 0.39 | 1.50 | 39.9 | 4.8 | 213 | 220 | 0.97 | 15 | ○ |
| 7 | 11.5 | 4.5 | 3 | 0.39 | 1.50 | 34.3 | 4.2 | 244 | 220 | 1.11 | 19 | ○ |
| 8 | 11.5 | 4.5 | 3 | 0.39 | 1.50 | 84.8 | 8.4 | 251 | 220 | 1.14 | 0 | ⊙ |
| 9 | 11.5 | 4.5 | 3 | 0.39 | 1.50 | 88.1 | 11.1 | 209 | 220 | 0.95 | 0 | ⊙ |
| 10 | 11.5 | 4.5 | 3 | 0.39 | 1.50 | 88.1 | 11.1 | 280 | 220 | 1.27 | 18 | ⊙ |
| 11 | 11.5 | 4.5 | 3 | 0.39 | 1.50 | 88.1 | 11.1 | 290 | 220 | 1.32 | 18 | ○ |
| 12 | 11.5 | 4.5 | 3 | 0.39 | 1.50 | 88.1 | 11.1 | 178 | 220 | 0.81 | 12 | ⊙ |
| 13 | 11.5 | 4.5 | 3 | 0.39 | 1.50 | 88.1 | 11.1 | 270 | 220 | 1.23 | 13 | ⊙ |
| 14 | 11.5 | 4.5 | 3 | 0.39 | 1.50 | 88.1 | 11.1 | 255 | 220 | 1.16 | 7 | ⊙ |
| 15 | 11.5 | 4.5 | 3 | 0.39 | 1.50 | 88.1 | 11.1 | 233 | 220 | 1.06 | 5 | ⊙ |
| 16 | 11.5 | 4.5 | 3 | 0.39 | 1.50 | 88.1 | 11.1 | 221 | 220 | 1.00 | 3 | ⊙ |
| 17 | 11.5 | 4.5 | 3 | 0.39 | 1.50 | 88.1 | 11.1 | 217 | 220 | 0.99 | 9 | ⊙ |
| 18 | 11.5 | 4.5 | 3 | 0.39 | 1.50 | 88.1 | 11.1 | 233 | 220 | 1.06 | 0 | ⊙ |
| 19 | 11.5 | 4.5 | 3 | 0.39 | 1.50 | 88.1 | 11.1 | 223 | 220 | 1.01 | 0 | ⊙ |
| 20 | 11.5 | 4.5 | 3 | 0.39 | 1.50 | 88.1 | 11.1 | 247 | 220 | 1.12 | 0 | ⊙ |
| 21 | 11.5 | 6.0 | 2.0 | 0.52 | 3.00 | 88.1 | 11.1 | 217 | 220 | 0.99 | 0 | ⊙ |
| 22 | 11.5 | 5.0 | 8.0 | 0.43 | 0.63 | 88.1 | 11.1 | 205 | 220 | 0.93 | 0 | ⊙ |
| 23 | 10.0 | 10.0 | 10.0 | 1.00 | 1.00 | 88.1 | 11.1 | 220 | 220 | 1.00 | 0 | ⊙ |

EP 3 498 874 A1

16

(continued)

| No | Weld metal section distances | | | | | Y/Ceq$_{BM}$ | Ceq$_W$/Ceq$_{BM}$ | WM Hv | BM Hv | WM Hv/BM Hv | Proportion of structure other than austenite | CTS |
|----|------|------|-----|-------|-------|-----|-----|-----|-----|------|-----|-----|
| | r1 | r2 | r3 | r2/r1 | r2/r3 | | | | | | | |
| 24 | 11.5 | 11.5 | 6.0 | 1.00 | 1.92 | 88.1 | 11.1 | 188 | 220 | 0.85 | 0 | ○ |
| 25 | 13.0 | 4.0 | 3.2 | 0.31 | 1.25 | 88.1 | 11.1 | 155 | 220 | 0.70 | 0 | ○ |
| 26 | 11.5 | 4.5 | 3.0 | 0.39 | 1.50 | 88.1 | 11.1 | 133 | 180 | 0.74 | 1 | ⊙ |
| 27 | 11.5 | 4.5 | 3.0 | 0.39 | 1.50 | 88.1 | 11.1 | 239 | 250 | 0.95 | 0 | ⊙ |
| 28 | 11.5 | 4.5 | 3.0 | 0.39 | 1.50 | 88.1 | 11.1 | 242 | 350 | 0.69 | 0 | ⊙ |
| 29 | 11.5 | 4.5 | 3.0 | 0.39 | 1.50 | 88.1 | 11.1 | 123 | 450 | 0.27 | 2 | ○ |
| 30 | 11.5 | 4.5 | 3.0 | 0.39 | 1.50 | 88.1 | 11.1 | 132 | 220 | 0.60 | 0 | ⊙ |
| 31 | 11.5 | 4.5 | 3 | 0.39 | 1.50 | 27.6 | 9.7 | 221 | 220 | 1.00 | 9 | ⊙ |
| 32 | 11.5 | 4.5 | 3 | 0.39 | 1.50 | 19.5 | 8.2 | 242 | 220 | 1.10 | 16 | ○ |
| 33 | 11.5 | 4.5 | 3.0 | 0.39 | 1.50 | 88.1 | 11.1 | 235 | 220 | 1.07 | 0 | ⊙ |

[Table 5]

[Table 5]

Table 5

| No | Deposit section, distances | | | | | Y/Ceq$_{BM}$ | Ceq$_W$/Ceq$_{BM}$ | WM Hv | BM Hv | WM Hv/BM Hv | Proportion of structure other than austenite | CTS |
|---|---|---|---|---|---|---|---|---|---|---|---|---|
| | r1 | r2 | r3 | r2/r1 | r2/r3 | | | | | | | |
| 34 | 11.5 | 4.5 | 3.0 | 0.39 | 1.50 | 36.9 | 7.7 | 395 | 220 | 1.80 | 20 | × |
| 35 | 11.5 | 4.5 | 3.0 | 0.39 | 1.50 | 36.2 | 6.7 | 387 | 220 | 1.76 | 43 | × |
| 36 | 11.5 | 4.0 | 2.0 | 0.35 | 2.00 | 36.9 | 11.1 | 408 | 220 | 1.86 | 21 | × |
| 37 | 11.5 | 9.0 | 4.0 | 0.78 | 2.25 | 88.1 | 11.1 | 376 | 220 | 1.71 | 43 | × |
| 38 | 11.5 | 11.5 | 4.0 | 1.00 | 2.88 | 88.1 | 11.1 | 390 | 220 | 1.77 | 28 | × |
| 39 | 11.5 | 4.5 | 3 | 0.39 | 1.50 | 41.1 | 4.7 | 318 | 220 | 1.44 | 20 | × |
| 40 | 11.5 | 4.5 | 3 | 0.39 | 1.50 | 103.6 | 9.1 | 491 | 220 | 2.23 | 21 | × |
| 41 | 11.5 | 4.5 | 3 | 0.39 | 1.50 | 75.5 | 5.6 | 373 | 220 | 1.70 | 25 | × |
| 42 | 11.5 | 4.5 | 3 | 0.39 | 1.50 | 75.5 | 5.6 | 400 | 220 | 1.82 | 33 | × |
| 43 | 11.5 | 4.5 | 3 | 0.39 | 1.50 | 66.8 | 3.8 | 392 | 220 | 1.78 | 55 | × |
| 44 | 11.5 | 4.5 | 3 | 0.39 | 1.50 | 48.0 | 8.5 | 402 | 220 | 1.83 | 27 | × |
| 45 | 11.5 | 4.5 | 3 | 0.39 | 1.50 | 63.0 | 6.9 | 398 | 220 | 1.81 | 25 | × |
| 46 | 11.5 | 4.5 | 3 | 0.39 | 1.50 | 51.8 | 7.1 | 371 | 220 | 1.69 | 21 | × |
| 47 | 11.5 | 4.5 | 3 | 0.39 | 1.50 | 75.5 | 6.3 | 378 | 220 | 1.72 | 24 | × |
| 48 | 11.5 | 4.5 | 3 | 0.39 | 1.50 | 64.3 | 7.9 | 364 | 220 | 1.65 | 28 | × |
| 49 | 11.5 | 4.5 | 3.0 | 0.39 | 1.50 | 3.5 | 0.4 | 414 | 220 | 1.88 | 78 | × |
| 50 | 11.5 | 4.5 | 3.0 | 0.39 | 1.50 | 88.1 | 11.1 | 361 | 208 | 1.73 | 21 | × |
| 51 | 11.5 | 4.5 | 3.0 | 0.39 | 1.50 | 1.74 | 0.0 | 403 | 220 | 1.83 | 87 | × |
| 52 | 11.5 | 4.5 | 3.0 | 0.39 | 1.50 | 1.94 | 0.0 | 431 | 220 | 1.96 | 92 | × |
| 53 | 11.5 | 4.5 | 3.0 | 0.39 | 1.50 | 2.33 | 0.0 | 456 | 220 | 2.07 | 95 | × |

EP 3 498 874 A1

Samples 1 to 33 are examples, and samples 34 to 53 are comparative examples.

In samples 34 to 53, in which the proportion of the structures other than austenite in the weld metal structure was 20% or more, in other words, the proportion of the austenite structure in the weld metal structure was 80% or less and was outside the range of specified by the present invention, sufficient strength was not obtained in the cross tension testing.

In contrast, samples 1 to 33 that satisfy the requirements specified in the present invention exhibited sufficient strength in the cross tension testing.

It is clear to a person skilled in the art that although the present invention has been described in detail by referring to the embodiments, various modifications and alterations are possible without departing from the spirit and the scope of the present invention.

The present application is based on Japanese Patent Application filed on August 4, 2016 (Japanese Patent Application No. 2016-154054), the entire contents of which are incorporated herein by reference.

Reference Signs List

1: first steel sheet
2: second steel sheet
3: weld metal
4: HAZ (heat affected zone)
11: front surface
12: rear surface
21: front surface
22: rear surface
100: welded structure
201: first steel sheet
202: second steel sheet
203: weld metal
204: hole
211: front surface
212: rear surface
221: front surface
222: rear surface

**Claims**

1. An arc spot welding method that uses a steel sheet having a carbon equivalent $Ceq_{BM}$, which is expressed by formula (1) below, of 0.35 or more and a C content of 0.35 mass% or more, the method comprising forming a weld metal having a structure in which a proportion of an austenite structure is more than 80%:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[MO]_{BM}$, and respectively represent C, Mn, Cu, Ni, Cr, Mo, and V contents (mass%) in the steel sheet).

2. The arc spot welding method according to Claim 1, wherein a welding wire containing 30 mass% or more of Ni is used.

3. The arc spot welding method according to Claim 1, wherein a welding wire containing C: 1.5 mass% or less, Si: 0.5 to 0.7 mass%, Mn: 10 to 20 mass%, Ni: less than 30 mass%, Cr: 1 to 5 mass%, and Mo: 5 mass% or less, where a total of Mn and Ni is 25 mass% or more, is used.

4. The arc spot welding method according to Claim 1, wherein a welding wire in which X expressed by formula (2) below is -600 or less is used:

$$X = 521 - 353[C]_W - 22[Si]_W - 24.3[Mn]_W - 7.7[Cu]_W - 17.3[Ni]_W - 17.7[Cr]_W - 25.8[Mo]_W \quad (2)$$

(where $[C]_W$, $[Si]_W$, $[Mn]_W$, $[Cu]_W$, $[Ni]_W$, $[Cr]_W$, and $[Mo]_W$ respectively represent C, Si, Mn, Cu, Ni, Cr, and Mo contents (mass%) in the welding wire).

5. The arc spot welding method according to Claim 1, wherein a welding wire in which Y expressed by formula (3) below is 20 to 100 is used:

$$Y = [Ni]_W + [Mo]_W + 30[C]_W + 0.5[Mn]_W \quad (3)$$

(where $[Ni]_W$, $[Mo]_W$, $[C]_W$, and $[Mn]_W$ respectively represent Ni, Mo, C, and Mn contents (mass%) in the welding wire).

6. The arc spot welding method according to Claim 1, wherein a ratio of a Vickers hardness of the weld metal to a Vickers hardness of the steel sheet (Vickers hardness of weld metal/Vickers hardness of steel sheet) is 0.6 to 1.3.

7. The arc spot welding method according to Claim 1, wherein a heat input is 5.0 kJ or less.

8. The arc spot welding method according to any one of Claims 1 to 7, wherein, when arc spot welding is performed on a first steel sheet on an arc exposed side and a second steel sheet that are superimposed on top of each other with a rear surface of the first steel sheet facing a front surface of the second steel sheet, and when a bead diameter of the weld metal on a front surface of the first steel sheet is assumed to be r1 and a bead diameter of the weld metal on the front surface of the second steel sheet is assumed to be r2,
r1, r2, Y, and $Ceq_{BM}$ satisfy formulae (3) to (5) below:

$$Y = [Ni]_W + [Mo]_W + 30[C]_W + 0.5[Mn]_W \quad (3)$$

(where $[Ni]_W$, $[Mo]_W$, $[C]_W$, and $[Mn]_W$ respectively represent Ni, Mo, C, and Mn contents (mass%) in the welding wire)

$$0.35 \le (r2/r1) \le 1.00 \quad (4)$$

$$25 \le (Y/Ceq_{BM}) \le 125 \quad (5)$$

9. A welding wire to be used in arc spot welding using a steel sheet having a carbon equivalent $Ceq_{BM}$, which is expressed by formula (1) below, of 0.35 or more and a C content of 0.35 mass% or more, the welding wire comprising 30 mass% or more of Ni:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[Mo]_{BM}$, and respectively represent C, Mn, Cu, Ni, Cr, Mo, and V contents (mass%) in the steel sheet).

10. A welding wire to be used in arc spot welding using a steel sheet having a carbon equivalent $Ceq_{BM}$, which is expressed by formula (1) below, of 0.35 or more and a C content of 0.35 mass% or more, the welding wire comprising C: 1.5 mass% or less, Si: 0.5 to 0.7 mass%, Mn: 10 to 20 mass%, Ni: less than 30 mass%, Cr: 1 to 5 mass%, and Mo: 5 mass% or less, where a total of Mn and Ni is 25 mass% or more:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (1)$$

(where $[C]_{BM}$, $[Mn]_{BM}$, $[Cu]_{BM}$, $[Ni]_{BM}$, $[Cr]_{BM}$, $[MO]_{BM}$, and respectively represent C, Mn, Cu, Ni, Cr, Mo, and V contents (mass%) in the steel sheet).

# FIG. 1

<u>100</u>

# FIG. 2

<u>100</u>

# FIG. 3

## INTERNATIONAL SEARCH REPORT

| International application No. |
| --- |
| PCT/JP2017/028015 |

**A. CLASSIFICATION OF SUBJECT MATTER**
*C22C38/00*(2006.01)i, *B23K9/00*(2006.01)i, *B23K9/007*(2006.01)i, *B23K9/23*
(2006.01)i, *B23K35/30*(2006.01)i, *C22C38/58*(2006.01)n

According to International Patent Classification (IPC) or to both national classification and IPC

**B. FIELDS SEARCHED**

Minimum documentation searched (classification system followed by classification symbols)
C22C38/00, B23K9/00, B23K9/007, B23K9/23, B23K35/30, C22C38/58

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015/016287 A1 (Nippon Steel & Sumitomo Metal Corp.), 05 February 2015 (05.02.2015), & US 2016/0158865 A1 & EP 3028799 A1 & CN 105358282 A & KR 10-2016-0023902 A | 1–10 |
| A | JP 2013-10139 A (Nippon Steel & Sumitomo Metal Corp.), 17 January 2013 (17.01.2013), (Family: none) | 1–10 |
| A | JP 2006-68796 A (Nippon Steel Corp.), 16 March 2006 (16.03.2006), (Family: none) | 1–10 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 October 2017 (18.10.17) | 31 October 2017 (31.10.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2017/028015

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-241668 A  (Nippon Steel Corp.), 19 September 1995 (19.09.1995), (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013010139 A
- JP 2016154054 A